# EUROPEAN PATENT APPLICATION

(11) **EP 4 509 368 A1**
(43) Date of publication of application: **19.02.2025**
(21) Application number: 24187729.9
(22) Date of filing: 10.07.2024
(51) Int. Cl.: B60R 16/02, B60K 6/40

(54) **ELECTRICAL COMPONENT SUPPORT STRUCTURE**

(30) Priority: 17.08.2023 JP 2023132847
(71) Applicant: Suzuki Motor Corporation, Shizuoka 432-8611 (JP)
(72) Inventor: MIURA, Takahiro, HAMAMATSU-SHI, 432-8611 (JP); KATO, Hidetoshi, HAMAMATSU-SHI, 432-8611 (JP); AKASAKA, Fumiya, HAMAMATSU-SHI, 432-8611 (JP); SUZUKI, Jumpei, HAMAMATSU-SHI, 432-8611 (JP)
(74) Representative: Plasseraud IP

(57) **Abstract**

To provide an electrical component support structure capable of suppressing vibration of an electrical component disposed above a drive device, and protecting a cover member of the electrical component in the event of a frontal collision of a vehicle.

[Solution]

In a support structure of an inverter 9, an upper wall 9B of the inverter 9 is provided with a cable connection portion connected to a high-voltage cable 12 supplying electric power to a motor-generator 6, and a cover member 21 covering the cable connection portion. The inverter 9 is fixed to an engine by an upper bracket 22 connected to the upper wall 9B of the inverter 9, and the upper bracket 22 covers an upper portion of the cover member 21.

## Description

### [Technical Field]

This invention relates to an electrical component support structure.

### [Background of the Invention]

In an electric vehicle, member that protects a power cable in the event of a collision of the vehicle is known (refer to Patent Literature 1).

In the electric vehicle described in Patent Literature 1, an inverter is fixed to an upper portion of a drivetrain by a front bracket, a protector is integrally provided with the front bracket, and the power cable extends from a side surface of the inverter in a lateral direction.

The protector is disposed in front of the power cable, and the protector protects the power cable from a device moving rearward toward the inverter in the event of a collision of the vehicle.

### [Prior Art]

### [Patent Literature]

[Patent Literature 1] JP 2013-233836 A

### [Summary of the Invention]

### [Problem to be solved by the Invention]

However, in a conventional electric vehicle, since the protector is located at a lower portion of the inverter, the protector is not suitable for protecting components disposed at an upper portion of the inverter.

An electrical component such as an inverter includes a cable connection portion of which an upper surface portion is connected to a high-voltage cable, and the cable connection portion is covered with a cover member. In such an electrical component, a cover member needs to be protected from an obstacle in the event of a collision of the vehicle.

In addition, when a lower portion of the electrical component is attached to a drive device such as a drivetrain by a bracket, vibration of an upper portion of the electrical component may increase, which is a risk. Therefore, it is necessary to suppress vibration of the electrical component disposed above the drive device, and protect the cover member in the event of a frontal collision of the vehicle.

This invention has been made in view of the above-described problems, and an object of this invention is to provide an electrical component support structure capable of suppressing vibration of an electrical component disposed above a drive device, and protecting a cover member of the electrical component in the event of a frontal collision of a vehicle.

### [Means to solve the problem]

According to aspects of this invention, there is provided an electrical component support structure for an electrical component mounted in a vehicle including an internal combustion engine, a drive device connected to the internal combustion engine, and a motor provided on the drive device, and fixed to an upper portion of the drive device by a lower bracket. A cable connection portion connected to a high-voltage cable supplying electric power to the motor and a cover member covering the cable connection portion are provided at an upper end portion of the electrical component. The electrical component is fixed to the internal combustion engine by an upper bracket connected to the upper end portion of the electrical component. The upper bracket covers an upper portion of the cover member.

### [Effect of the Invention]

According to this invention described above, it is possible to suppress vibration of the electrical component disposed above the drive device, and it is possible to protect the cover member of the electrical component in the event of a frontal collision of the vehicle.

### [Brief description of figures]

[Fig. 1] Fig. 1 is a plan view of an engine compartment of a vehicle having an electrical component support structure according to an embodiment of this invention.
[Fig. 2] Fig. 2 is a plan view of the electrical component support structure according to an embodiment of this invention.
[Fig. 3] Fig. 3 is a front view of the electrical component support structure according to an embodiment of this invention.
[Fig. 4] Fig. 4 is a perspective view of the electrical component support structure according to an embodiment of this invention.
[Fig. 5] Fig. 5 is a top view of an electrical component from which an upper bracket is removed, as a figure showing the electrical component support structure according to an embodiment of this invention.
[Fig. 6] Fig. 6 is a left side view of the electrical component support structure according to an embodiment of this invention, as a figure showing a state of movement of an obstacle.

### [Embodiment(s) of the Invention]

An electrical component support structure according to embodiments of this invention is an electrical component support structure for an electrical component mounted in a vehicle including an internal combustion engine, a drive device connected to the internal combustion engine, and a motor provided on the drive device, and fixed to an upper portion of the drive device by a lower bracket. A cable connection portion connected to a high-voltage cable supplying electric power to the motor and a cover member covering the cable connection portion are provided at an upper end portion of the electrical component. The electrical component is fixed to the internal combustion engine by an upper bracket connected to the upper end portion of the electrical component. The upper bracket covers an upper portion of the cover member.

Accordingly, the electrical component support structure according to embodiments of this invention can suppress vibration of the electrical component disposed above the drive device, and protect the cover member of the electrical component in the event of a frontal collision of the vehicle.

### [Embodiments]

Hereinafter, embodiments of an electrical component support structure according to this invention will be described with reference to the drawings.

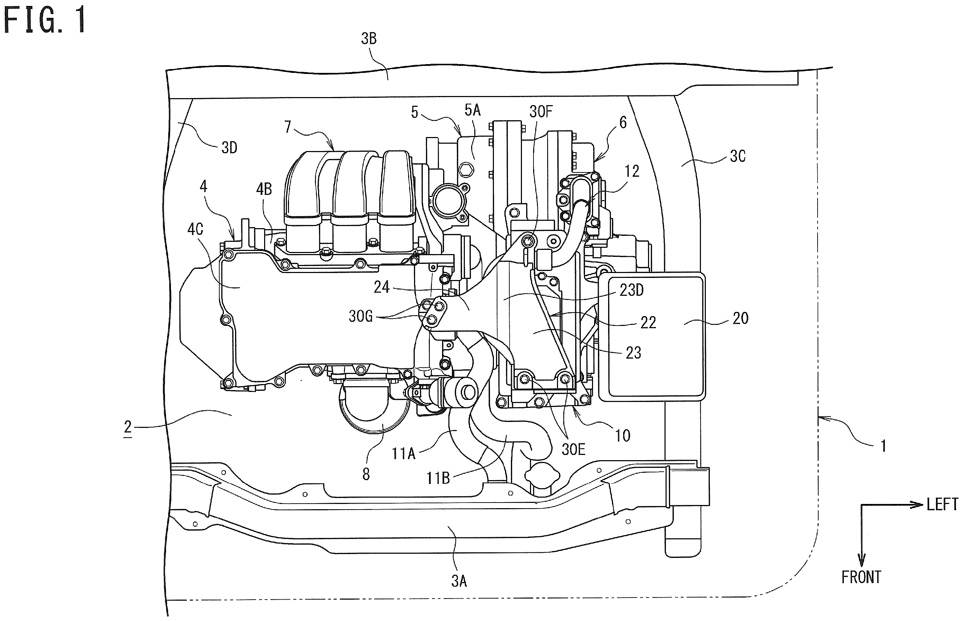

Figs. 1 to 6 are views showing the electrical component support structure of embodiments according to this invention.

In Figs. 1 to 6, the up and down, front and rear, and left and right directions are defined such that with reference to an engine and a transmission installed in a vehicle, a front and rear direction of the vehicle is the front and rear direction, a side where an upper member is disposed is the front, and a side where a dash panel is disposed is the rear.

A left and right direction of the vehicle (vehicle width direction) is the left and right direction, a transmission side is the left, and an engine side is the right.

A height direction of the engine and the transmission is the up and down direction, an electrical component side is the top or up, and a side opposite to an electrical component is the bottom or down.

First, a configuration will be described.

In Fig. 1, an engine compartment 2 is disposed at a front portion of a vehicle 1, and the engine compartment 2 is surrounded by an upper member 3A, a dash panel 3B located behind the upper member 3A, a left side member 3C extending rearward from a left end portion of the upper member 3A, and a right side member 3D extending rearward from a right end portion of the upper member 3A.

An engine 4 as an internal combustion engine and a transmission 5 as a drive device are disposed in the engine compartment 2, and the transmission 5 is connected to the engine 4.

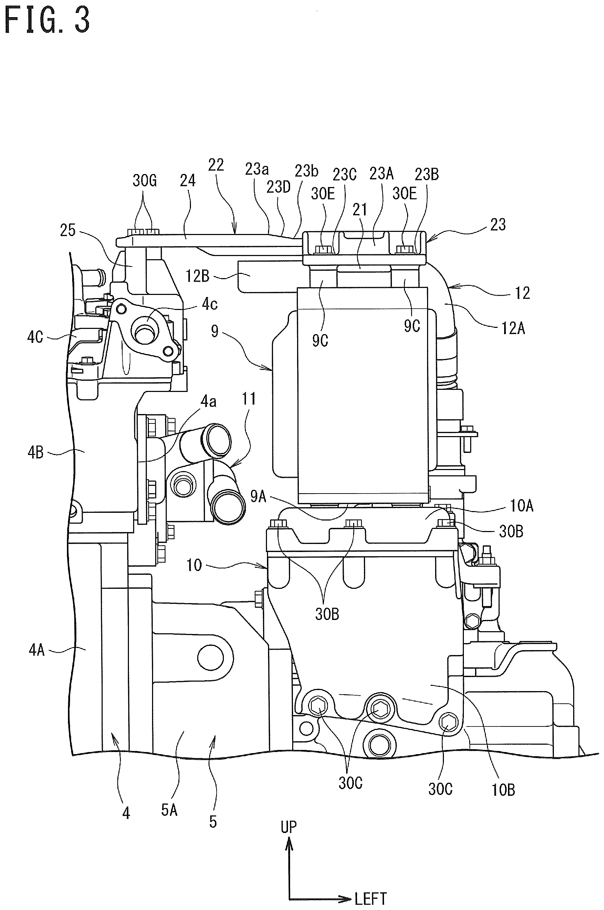

As shown in Figs. 1 and 3, the engine 4 includes a cylinder block 4A; a cylinder head 4B attached to an upper portion of the cylinder block 4A; and a cylinder head cover 4C attached to an upper portion of the cylinder head 4B, and the transmission 5 includes a transmission case 5A.

The transmission case 5A is connected to the cylinder block 4A. The engine 4 and the transmission 5 are installed side by side in a width direction of the vehicle 1 (hereinafter, referred to as the vehicle width direction), and the transmission 5 is installed below the cylinder head 4B.

A transmission mechanism, a differential device, and the like formed of transmission gears and the like (not shown) are installed inside the transmission case 5A. The transmission 5 changes the speed of power (rotation), which is transmitted from a crankshaft (not shown) of the engine 4, using the transmission mechanism, and transmits the power to left and right front wheels (not shown) via left and right drive shafts (not shown) using the differential device.

A motor-generator 6 as a motor is attached to the transmission case 5A (refer to Fig. 1). The motor-generator 6 transmits power to the transmission mechanism of the transmission 5 via a speed reduction mechanism (not shown), and performs motor traveling using the motor-generator 6 as a drive source and hybrid traveling using both the engine 4 and the motor-generator 6.

As shown in Fig. 1, an intake manifold 7 is connected to a rear surface of the cylinder head 4B. The intake manifold 7 introduces intake air from intake ports (not shown) formed in the cylinder head 4B to cylinders (not shown) formed in the cylinder block 4A.

A catalytic converter 8 is connected to a front surface of the cylinder head 4B. Exhaust gas is discharged from the cylinders to the catalytic converter 8 via exhaust ports (not shown) of the cylinder head 4B and an exhaust manifold.

As shown in Fig. 3, an auxiliary device 11 such as a coolant case is connected to a left side wall 4a of the cylinder head 4B, and the auxiliary device 11 is connected to a radiator (not shown) via coolant pipes 11A and 11B (refer to Fig. 1).

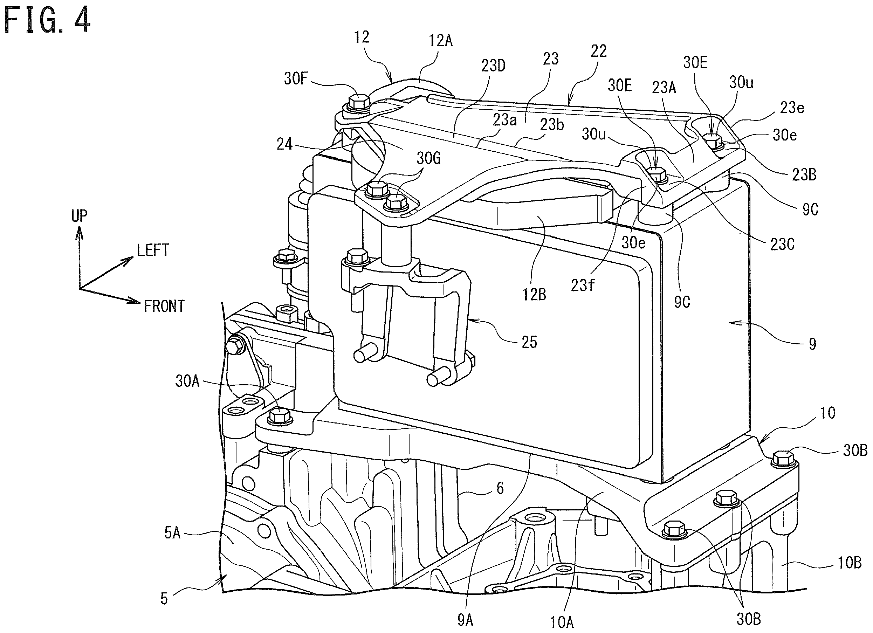

As shown in Figs. 3 and 4, an inverter 9 as an electrical component is disposed at an upper portion of the transmission case 5A. The inverter 9 converts DC electric power supplied from a high-voltage battery (not shown) into three-phase AC electric power to supply the three-phase AC electric power to the motor-generator 6, and converts three-phase AC electric power generated by the motor-generator 6 into DC electric power to charge the high-voltage battery with the DC electric power. A low-voltage battery 20 is disposed on the left side of the inverter 9.

As shown in Fig. 4, the inverter 9 is disposed directly above the transmission case 5A such that a longitudinal direction of the inverter 9 is aligned with the front and rear direction of the vehicle 1 and a lateral direction of the inverter 9 is aligned with the vehicle width direction. Namely, the inverter 9 is formed to be long in the front and rear direction and shorter in the vehicle width direction than in the front and rear direction, and is formed in a rectangular parallelepiped shape.

A lower bracket 10 is provided on a lower wall 9A of the inverter 9. The lower bracket 10 includes a horizontal bracket portion 10A and a vertical bracket portion 10B.

The horizontal bracket portion 10A extends in the front and rear direction along the lower wall 9A of the inverter 9, and the inverter 9 is fixed to the horizontal bracket portion 10A by fastening bolts (not shown) to the lower wall 9A from below the horizontal bracket portion 10A.

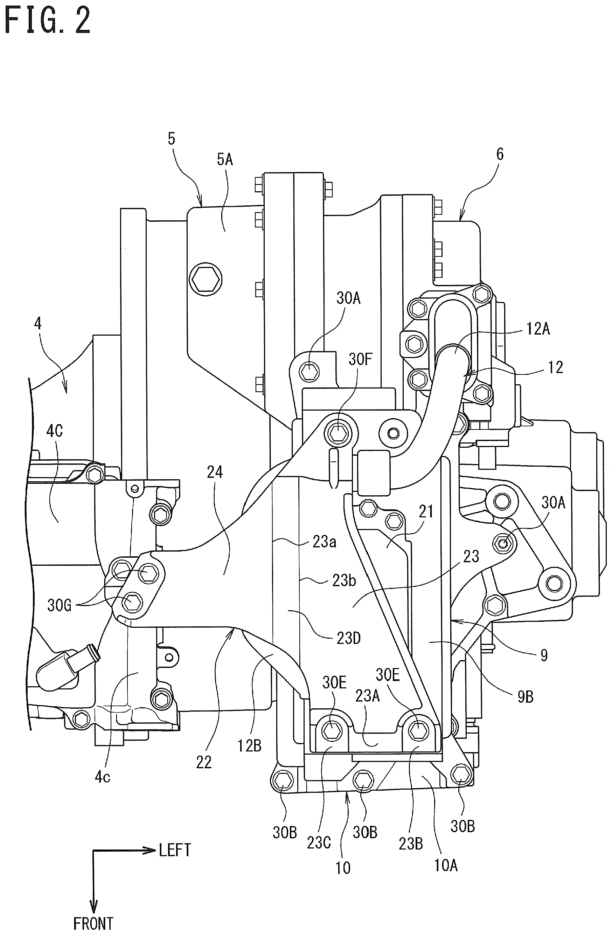

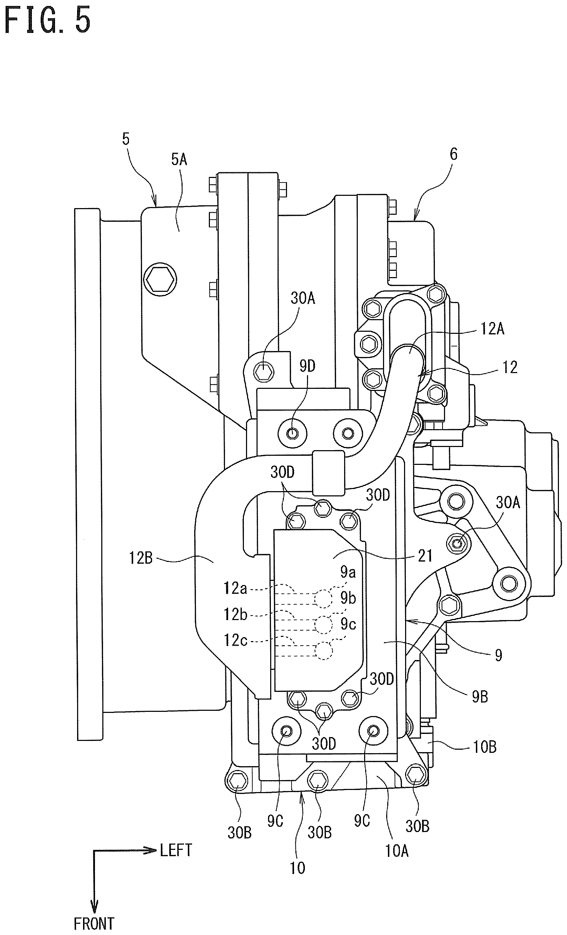

A rear end portion and a central portion of a left end portion of the horizontal bracket portion 10A in the front and rear direction are fastened to the transmission case 5A by bolts 30A (refer to Figs. 2 and 5), and a front end portion of the horizontal bracket portion 10A is fastened to an upper end portion of the vertical bracket portion 10B by bolts 30B.

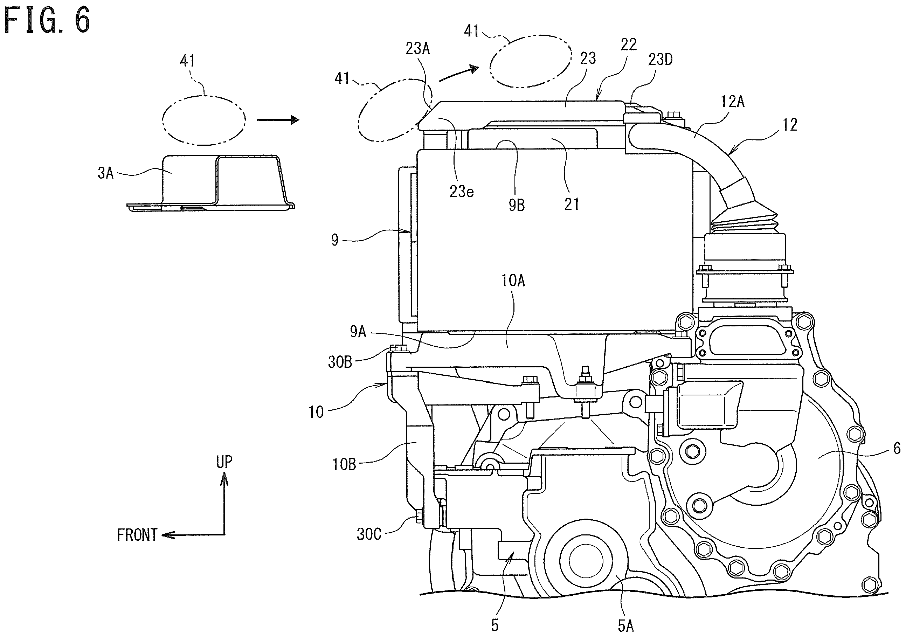

As shown in Figs. 3 and 6, a lower end portion of the vertical bracket portion 10B is fastened to the transmission case 5A by bolts 30C. In such a manner, the inverter 9 is attached to the transmission case 5A by the lower bracket 10.

As shown in Fig. 5, the motor-generator 6 and the inverter 9 are connected by a high-voltage cable 12. The high-voltage cable 12 includes a protective protector 12A that is deformable; a protective case 12B connected to the protective protector 12A; and a U-phase cable 12a, a V-phase cable 12b, and a W-phase cable 12c built into the protective protector 12A and the protective case 12B (Fig. 5 shows parts of the cables 12a, 12b, and 12c).

One end portions of the U-phase cable 12a, the V-phase cable 12b, and the W-phase cable 12c are connected to the motor-generator 6, and the other end portions of the U-phase cable 12a, the V-phase cable 12b, and the W-phase cable 12c are connected to cable connection portions 9a, 9b, and 9c provided on an upper wall 9B of the inverter 9. The upper wall 9B of the inverter 9 forms an upper end portion of the inverter 9.

A cover member 21 is provided at the upper end portion of the inverter 9, and the cover member 21 is fastened to a front end and a rear end of the upper end portion of the inverter 9 by bolts 30D. Accordingly, the cable connection portions 9a, 9b, and 9c and connection portions of the U-phase cable 12a, the V-phase cable 12b, and the W-phase cable 12c connected to the cable connection portions 9a, 9b, and 9c are covered from above by the cover member 21, and are protected by the cover member 21.

As shown in Figs. 3 and 4, an upper bracket 22 is attached to the upper end portion of the inverter 9, and the upper bracket 22 covers an upper portion of the cover member 21.

The upper bracket 22 includes a bracket body portion 23 and an engine-side attachment portion 24.

The bracket body portion 23 extends in the front and rear direction along the upper wall 9B of the inverter 9 (refer to Fig. 6), and a length of the bracket body portion 23 in the front and rear direction is formed to be longer than a length of the cover member 21 in the front and rear direction.

As shown in Fig. 2, a dimension of a front end portion of the bracket body portion 23 in the vehicle width direction is formed to be larger than a dimension of the cover member 21 in the vehicle width direction, and the front end portion and a rear end portion of the bracket body portion 23 are fastened to the upper wall 9B of the inverter 9 by bolts 30E and 30F.

Specifically, as shown in Figs. 3 and 5, a pair of bolt fastening portions 9C are provided at a front end portion of the upper wall 9B of the inverter 9, and the bolt fastening portions 9C protrude upward from the upper wall 9B of the inverter 9.

The front end portion of the bracket body portion 23 is fastened to the bolt fastening portions 9C by the bolts 30E.

As shown in Fig. 5, bolt fastening portions 9D are provided at the rear end portion of the upper wall 9B of the inverter 9, and the bolt fastening portions 9D protrude upward from the upper wall 9B of the inverter 9.

The rear end portion of the bracket body portion 23 is fastened to the bolt fastening portions 9D by the bolts 30F.

In addition, since the upper bracket 22 is separated upward from the upper wall 9B of the inverter 9 by the bolt fastening portions 9C and 9D, a gap in the up and down direction is formed between the cover member 21 and the upper bracket 22.

As shown in Fig. 2, the engine-side attachment portion 24 protrudes from a right end portion 23a of the bracket body portion 23 toward an engine 4 side on the right, and the right end portion is fastened to an upper end portion of an EGR passage portion 4c, which is provided at a left end portion of the cylinder head cover 4C, by bolts 30G.

Specifically, as shown in Fig. 3, an engine-side bracket 25 is provided at an upper portion of the EGR passage portion 4c of the cylinder head cover 4C, and a right end portion of the engine-side attachment portion 24 is fastened to an upper end portion of the engine-side bracket 25 by the bolts 30G.

In such a manner, the upper wall 9B of the inverter 9 is fixed to the engine 4 by the upper bracket 22. The engine-side attachment portion 24 of this embodiment forms an internal combustion engine-side attachment portion, and the bolts 30E, 30F, and 30G form fasteners.

As shown in Figs. 4 and 6, an inclined surface 23A is formed at a front end portion of the bracket body portion 23 of the upper bracket 22, and the inclined surface 23A is inclined toward the upper side as the inclined surface 23A extends rearward from the front end portion.

As shown in Fig. 2, an inclined portion 23D is formed in the bracket body portion 23. The inclined portion 23D is inclined downward from the right end portion 23a of the bracket body portion 23 toward an inclination end portion 23b on the left, and extends in the front and rear direction.

In such a manner, since the upper bracket 22 includes the inclined portion 23D extending in the front and rear direction, the torsional rigidity of the bracket body portion 23 with respect to the engine-side attachment portion 24 as the center is increased. Incidentally, the right end portion 23a of the bracket body portion 23 corresponds to an inclination start portion.

As shown in Figs. 2 and 4, recesses 23B and 23C are formed in the front end portion of the bracket body portion 23, and the recesses 23B and 23C are formed by depressing the inclined surface 23A downward such that the recesses 23B and 23C are located below the inclined surface 23A.

The inclined surface 23A includes a left-side side wall 23e of the recess 23B and a right side wall portion 23f of the recess 23C, and the left-side side wall 23e and the right side wall portion 23f are inclined parallel to the inclined surface 23A. Namely, the left-side side wall 23e and the right side wall portion 23f are parts of the inclined surface 23A.

Heads 30e of the bolts 30E are disposed in the recesses 23B and 23C. Namely, threaded portions (not shown) of the bolts 30E penetrate through bottom portions of the recesses 23B and 23C, and are fastened to the upper wall 9B of the inverter 9.

Accordingly, the heads 30e of the bolts 30E are disposed in the recesses 23B and 23C, and as a result, upper ends 30u of the heads 30e are disposed in the recesses 23B and 23C.

As shown in Figs. 2 and 3, the protective case 12B located on the side of the cable connection portions 9a, 9b, and 9c of the high-voltage cable 12 is disposed below the engine-side attachment portion 24.

Next, effects of the support structure of the inverter 9 of this embodiment will be described.

The inverter 9 of this embodiment is mounted in the vehicle 1 including the engine 4; the transmission 5 connected to the engine 4; and the motor-generator 6 provided on the transmission 5, and is fixed to the upper portion of the transmission 5 by the lower bracket 10.

The upper wall 9B of the inverter 9 is provided with the cable connection portions 9a, 9b, and 9c connected to the high-voltage cable 12 that supplies electric power to the motor-generator 6, and the cover member 21 that covers the cable connection portions 9a, 9b, and 9c.

The inverter 9 is fixed to the engine 4 by the upper bracket 22 connected to the upper wall 9B of the inverter 9, and the upper bracket 22 covers an upper portion of the cover member 21.

In such a manner, since the upper wall 9B of the inverter 9 can be fixed to the engine 4 by the upper bracket 22, vibration of the upper wall 9B of the inverter 9 can be suppressed.

In addition, since the upper bracket 22 has a shape that covers the upper portion of the cover member 21, an obstacle 41 moving from the front of the vehicle 1 toward a cover member 21 side in the event of a frontal collision of the vehicle 1 is moved upward by the upper bracket 22. Therefore, the obstacle 41 can be prevented from colliding with the cover member 21 (refer to Fig. 6).

Since the upper bracket 22 of this embodiment includes the inclined portion 23D extending in the front and rear direction, the rigidity of the upper bracket 22 in the front and rear direction is increased. Accordingly, when an impact is applied to the upper bracket 22 from the front, it is made difficult for the upper bracket 22 to deform. Therefore, the impact can be effectively prevented from being applied to the cover member 21.

In addition, since the upper bracket 22 is separated upward from the upper wall 9B of the inverter 9 by the bolt fastening portions 9C and 9D, a gap in the up and down direction can be formed between the cover member 21 and the upper bracket 22.

Accordingly, when an impact is applied to the upper bracket 22 from above to below, the gap can be used as a cushioning material, and the cover member 21 can be protected by the upper bracket 22.

In addition, according to the support structure of the inverter 9 of this embodiment, the dimension of the front end portion of the upper bracket 22 in the vehicle width direction is formed to be larger than the dimension of the cover member 21 in the vehicle width direction.

Accordingly, the front of the cover member 21 can be covered over a wide range of the front end portion of the upper bracket 22 in the vehicle width direction. For this reason, the obstacle 41 moving from the front of the vehicle 1 toward the cover member 21 side in the event of a frontal collision of the vehicle 1 can be more reliably prevented from colliding with the cover member 21.

In addition, according to the support structure of the inverter 9 of this embodiment, the inclined surface 23A is formed at the front end portion of the upper bracket 22, and the inclined surface 23A is inclined toward the upper side as the inclined surface 23A extends rearward from the front end portion.

Accordingly, in the event of a frontal collision of the vehicle 1, the obstacle 41 moving from the front of the vehicle 1 toward the cover member 21 side is bounced upward by the inclined surface 23A disposed at the front end portion of the upper bracket 22 (refer to Fig. 6). Therefore, the obstacle 41 can be kept away from the cover member 21. For this reason, the obstacle 41 can be more reliably prevented from colliding with the cover member 21.

In addition, according to the support structure of the inverter 9 of this embodiment, the front end portion of the upper bracket 22 includes the recesses 23B and 23C formed by depressing the inclined surface 23A downward such that the recesses 23B and 23C are located below the inclined surface 23A. The front end portion of the upper bracket 22 is fastened to the upper wall 9B of the inverter 9 by the bolts 30E, and the upper ends 30u of the bolts 30E are disposed in the recesses 23B and 23C.

Accordingly, the upper ends 30u of the bolts 30E can be located below the inclined surface 23A, and the obstacle 41 can be guided upward along the inclined surface 23A while being prevented from colliding with the heads 30e of the bolts 30E. As a result, the obstacle 41 can be more reliably prevented from colliding with the cover member 21.

In addition, according to the support structure of the inverter 9 of this embodiment, the upper bracket 22 includes the bracket body portion 23 of which the front end portion and the rear end portion are fastened to the upper wall 9B of the inverter 9 by the bolts 30B and 30C, and the engine-side attachment portion 24 protruding from the bracket body portion 23 toward the engine 4 side, and fastened to the upper end portion of the EGR passage portion 4c of the cylinder head cover 4C by the bolts 30G.

In addition, the side of the cable connection portions 9a, 9b, and 9c of the high-voltage cable 12 is disposed below the engine-side attachment portion 24.

Accordingly, in the event of a frontal collision of the vehicle 1, the obstacle 41 can be caused to collide with the engine-side attachment portion 24 protruding from the bracket body portion 23 toward the engine 4 side, and in the event of a frontal collision_of the vehicle 1, the high-voltage cable 12 can be protected from collision with the obstacle 41.

While embodiments of this invention have been described, it is apparent that some artisan could have made adjustments without departing from the scope of this invention. It is intended that any and all such modifications and equivalents are involved in the appended claims.

### (DESCRIPTION OF REFERENCE NUMERALS)

1 ... Vehicle, 4 ... Engine (internal combustion engine), 5 ... Transmission (drive device), 6 ... Motor-generator (motor), 9 ... Inverter (electrical component), 9a, 9b, 9c ... Cable connection portion, 9B ... Upper wall (upper end portion of electrical component), 10 ... Lower bracket, 12 ... High-voltage cable, 21 ... Cover member, 22 ... Upper bracket, 23 ... Bracket body portion, 23A ... Inclined surface, 23B, 23C ... Recess, 24 ... Engine-side attachment portion (internal combustion engine-side attachment portion), 30E, 30F, 30G ... Bolt (fastener)

## Claims

1. An electrical component support structure for an electrical component (9) mounted in a vehicle (1) including an internal combustion engine (4), a drive device (5) connected to the internal combustion engine (4), and a motor (6) provided on the drive device (5), the electrical component (9) being fixed to an upper portion of the drive device (5) by a lower bracket (10),
wherein a cable connection portion (9a, 9b. 9c) connected to a high-voltage cable (12) supplying electric power to the motor (6) and a cover member (21) covering the cable connection portion (9a, 9b. 9c) are provided at an upper end portion (9B) of the electrical component (9),
wherein the electrical component (9) is fixed to the internal combustion engine (4) by an upper bracket (22) connected to the upper end portion (9B) of the electrical component (9), and
wherein the upper bracket (22) covers an upper portion of the cover member (21).

2. The electrical component support structure as claimed in claim 1,
wherein a dimension of a front end portion of the upper bracket (22) in a vehicle width direction is formed to be larger than a dimension of the cover member (21) in the vehicle width direction.

3. The electrical component support structure as claimed in claim 1 or 2,
wherein an inclined surface (23A) is formed at a front end portion of the upper bracket (22) in a front and rear direction of the vehicle (1), and
wherein the inclined surface (23A) is inclined upward as the inclined surface (23A) extends from the front end portion in the front and rear direction of the vehicle (1) toward a rear in the front and rear direction of the vehicle (1).

4. The electrical component support structure as claimed in claim 3,
wherein the upper bracket (22) includes a recess (23B, 23C) at the front end portion of the upper bracket (22) in the front and rear direction of the vehicle (1), the recess (23B, 23C) being formed by depressing the inclined surface (23A) downward such that the recess (23B, 23C) is located below the inclined surface (23A),
wherein the front end portion of the upper bracket (22) in the front and rear direction of the vehicle (1) is fastened to the upper end portion (9B) of the electrical component (9) by a fastener (30E, 30F), and
wherein an upper end of the fastener (30E, 30F) is disposed in the recess (23B, 23C).

5. The electrical component support structure as claimed in claim 1 or 2,
wherein the upper bracket (22) includes a bracket body portion (23) including a front end portion in a front and rear direction of the vehicle (1) and a rear end portion in the front and rear direction of the vehicle (1) fastened to the upper end portion (9B) of the electrical component (9) by fasteners (30E, 30F), and an internal combustion engine-side attachment portion (24) protruding from the bracket body portion (23) toward an internal combustion engine side, and fastened to an upper end portion of the internal combustion engine (4) by a fastener (30G), and
wherein a cable connection portion (9a, 9b, 9c) side of the high-voltage cable (12) is disposed below the internal combustion engine-side attachment portion (24).

6. The electrical component support structure as claimed in claim 3,
wherein the upper bracket (22) includes a bracket body portion (23) including a front end portion in the front and rear direction of the vehicle and a rear end portion in the front and rear direction of the vehicle fastened to the upper end portion (9B) of the electrical component (9) by fasteners (30E, 30F), and an internal combustion engine-side attachment portion (24) protruding from the bracket body portion (23) toward an internal combustion engine (4) side, and fastened to an upper end portion of the internal combustion engine (4) by a fastener (30G), and
wherein a cable connection portion (9a, 9b, 9c) side of the high-voltage cable (12) is disposed below the internal combustion engine-side attachment portion (24).

7. The electrical component support structure as claimed in claim 4,
wherein the upper bracket (22) includes a bracket body portion (23) including a front end portion in the front and rear direction of the vehicle and a rear end portion in the front and rear direction of the vehicle fastened to the upper end portion (9B) of the electrical component (9) by fasteners (30E, 30F), and an internal combustion engine-side attachment portion (24) protruding from the bracket body portion (23) toward an internal combustion engine (4) side, and fastened to an upper end portion of the internal combustion engine (4) by a fastener (30G), and
wherein a cable connection portion (9a, 9b, 9c) side of the high-voltage cable (12) is disposed below the internal combustion engine-side attachment portion (24).
